# EUROPÄISCHE PATENTSCHRIFT

(11) **EP 0 609 195 B1**
(45) Veröffentlichungstag und Bekanntmachung des Hinweises auf die Patenterteilung: **22.05.1996**
(21) Anmeldenummer: 94890015.4
(22) Anmeldetag: 20.01.1994
(51) Int. Cl.: B60C 11/03, B60C 11/04, B60C 11/11

(54) **Fahrzeugreifen**
Vehicle tyre
Bandage pneumatique pour véhicule

(30) Priorität: 28.01.1993 AT 144/93
(43) Veröffentlichungstag der Anmeldung: 03.08.1994
(73) Patentinhaber: Semperit Reifen Aktiengesellschaft, A-2514 Traiskirchen (AT)
(72) Erfinder: Diensthuber, Franz, A-2544 Schönau (AT)
(74) Vertreter: Vinazzer, Edith

(56) Entgegenhaltungen:
- EP-A- 0 466 998
- EP-A- 0 513 676
- EP-A- 0 524 568
- US-A- 4 962 801

## Beschreibung

Die vorliegende Erfindung betrifft einen Fahrzeugreifen mit einem drehrichtungsgebundenen Laufstreifenprofil, welches seitliche Rillen aufweist, die ausgehend vom Bereich des Reifenäquators zu den Laufstreifenrändem zu derart gekrümmt verlaufen, daß der Winkel zwischen Tangenten an die jeweilige Rillenmittellinie und der Äquatorlinie von der Äquatorlinie zu den Laufstreifenrändern zu größer wird, wobei die axial inneren Endbereiche der seitlichen Rillen beim Abrollen des Reifens Zuerst in die Kontaktfläche mit dem Untergrund eintreten und wobei ferner durch Nuten, die die in Umfangsrichtung einander benachbarten seitlichen Rillen miteinander verbinden, Profilblöcke gebildet sind.

Fahrzeugluftreifen mit derartigen Laufstreifenprofilen sind in unterschiedlichen Ausführungsvarianten bekannt. Reifen mit diesem Typ von Laufstreifenprofil werden aus Gründen des Fahrkomforts und der Nässetauglichkeit bevorzugt bei Personenkraftwagen verwendet, die eine höhere Geschwindigkeit erreichen können. Derartige Reifen können nun, je nach ihrem Einsatzzweck, entweder Profilblöcke aufweisen, die kaum oder nur geringfügig mit Feineinschnitten versehen sind oder Profilblöcke haben, die zur Schaffung von Griffkanten, um diese Reifen für den Einsatz unter winterlichen Fahrbedingungen tauglich zu machen, ausgeprägt lamelliert sind.

Ein Fahrzeugluftreifen der eingangs genannten Art ist beispielsweise der US-A 4962801 bekannt. Dieser Reifen besitzt ein drehrichtungsgebundenes Laufstreifenprofil mit seitlichen Rillen, die durch Nuten konstanter Breite miteinander verbunden sind, sodaß Profilblöcke gebildet werden.

Aus der EP-A 0466998 ist ferner ein Reifen mit einem Laufstreifenprofil bekannt, welches nicht laufrichtungsgebunden gestaltet ist und eine Vielzahl von in Umfangsrichtung verlaufenden Nuten und Querrillen besitzt, die im Laufstreifenmittelbereich einen Winkel zwischen 30 und 60°, in den Laufstreifenseitenbereichen einen Winkel zwischen 60 und 80° mit der Äquatorebene einschließen. Die Querrillen und die Umfangsnuten definieren Blöcke, welche durch die Ausgestaltung der sie in Umfangsrichtung voneinander trennenden Querrillen jeweils die Gestalt eines großen Parallelogramms mit angesetztem kleinen Parallelogramm besitzen.

Die Erfindung hat sich nun die Aufgabe gestellt, einen Fahrzeugluftreifen der eingangs genannten Art hinsichtlich der Biegesteifigkeit bzw. Stabilität des Laufstreifenprofiles zu verbessern, um eine weitere Optimierung hinsichtlich eines möglichst schnellen und exakten Ansprechens des Reifens auf Lenkkräfte zu erzielen.

Gelöst wird die gestellte Aufgabe erfindungsgemäß dadurch, daß zumindest jene Nuten, die bei am Fahrzeug montierten Reifen im Laufstreifenaußenbereich angeordnet sind, einen breiten und einen schmalen Nutabschnitt aufweisen, wobei die schmalen Nutabschnitte jene sind, die beim Abrollen des Reifens zuerst in die Kontaktfläche mit dem Untergrund eintreten.

Durch diese schmalen Nutabschnitte können sich die zwischen benachbarten seitlichen Rillen angeordneten Profilblöcke beim Auftreten von seitlichen Kräften aneinander abstützen, so daß der Verformung der Profilblöcke Grenzen gesetzt sind. Diese Maßnahme erhöht das Ansprechen des Reifens auch auf kleine Lenkkräfte. Die schmalen Nutabschnitte treten beim Abrollen des Reifens zuerst in die Kontaktfläche mit dem Untergrund, was aus Geräuschgründen sehr günstig ist, da dort komprimierte Luft über die breiten Nutabschnitte ungehindert in eine seitliche Rille entweichen kann.

Auf die Profilsteifigkeit wirkt es sich ferner günstig aus, wenn der Nutgrund dieser Nuten zumindest stellen- bzw. bereichsweise angehoben ist.

Bei einer ersten Ausführungsform der Erfindung ist dabei vorgesehen, daß der Nutgrund dieser Nuten im breiten Nutabschnitt bis zum schmalen Nutabschnitt zu stetig ansteigt und im schmalen Nutabschnitt auf die ursprüngliche Nuttiefe stetig abfällt.

Bei einer weiteren Ausführungsform ist vorgesehen, daß die Nuttiefe im schmalen Nutabschnitt konstant geringer ist als die Nuttiefe, die über zumindest einen Teil der Erstreckung des breiten Nutabschnittes als ebenfalls konstante Nuttiefe vorgesehen ist.

Im Bereich bzw. an der Stelle der geringsten Nuttiefe der Nuten beträgt die Dessintiefe zwischen 3 und 6 mm, bevorzugt 4 mm.

Es ist weiters günstig, wenn die Nuten mitsamt ihren schmalen Nutabschnitten als gerade verlaufende Nuten ausgebildet sind, die mit der Äquatorlinie des Reifens einen spitzen Winkel, der zwischen 15 und 40°, insbesondere zwischen 20 und 30°, beträgt. einschließen.

Für das Wasserableitvermögen des Laufstreifenprofiles ist es von Vorteil, wenn die schmalen Nutabschnitte höchstens über die Hälfte der Gesamtlänge der Nuten verlaufen.

Die Breite der schmalen Nutabschnitte sollte zur Gewährleistung des genannten Abstützeffektes benachbarter Profilblöcke zwischen 1,5 und 3 mm, insbesondere 2 mm, betragen.

Für einen gleichmäßigen Abrieb des Profiles ist es von Vorteil, wenn die eine Seitenwand des schmalen Nutabschnittes in Verlängerung der einen Seitenwand des breiten Nutabschnittes verläuft.

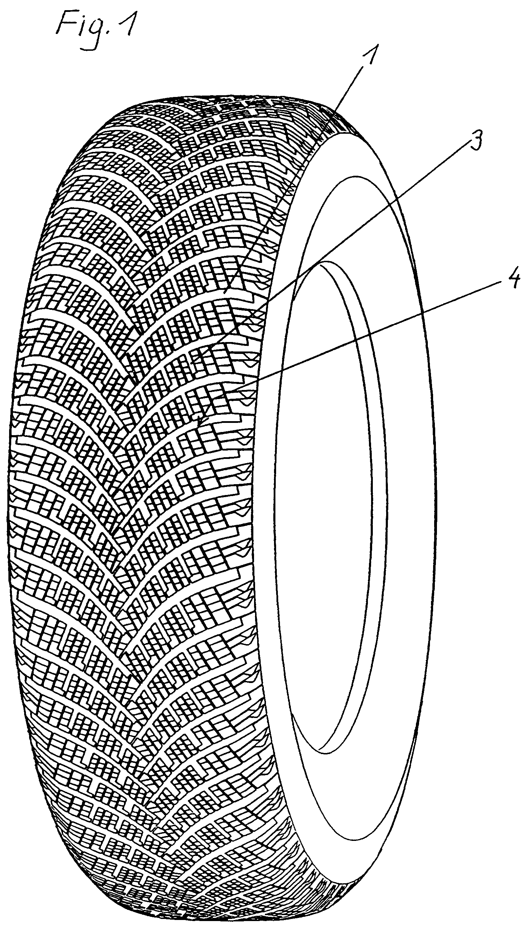

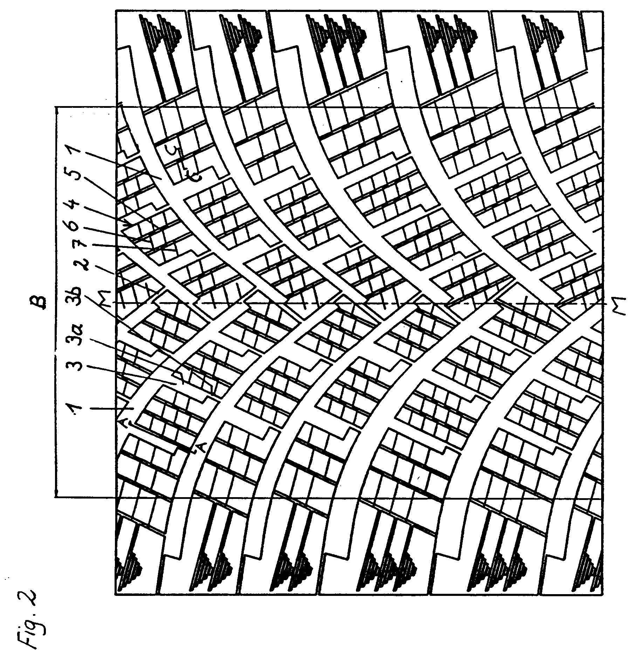

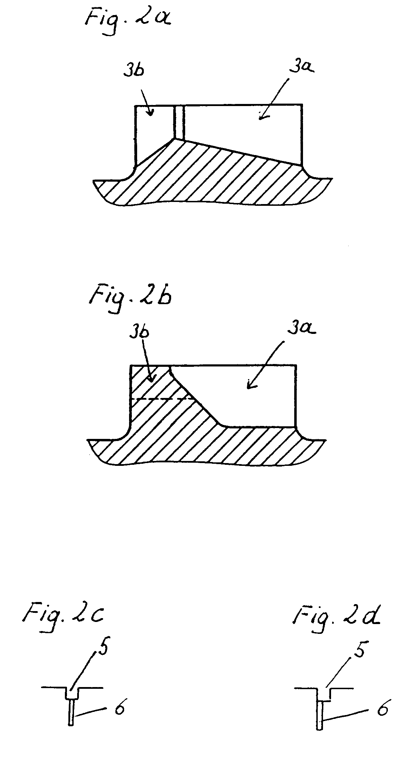

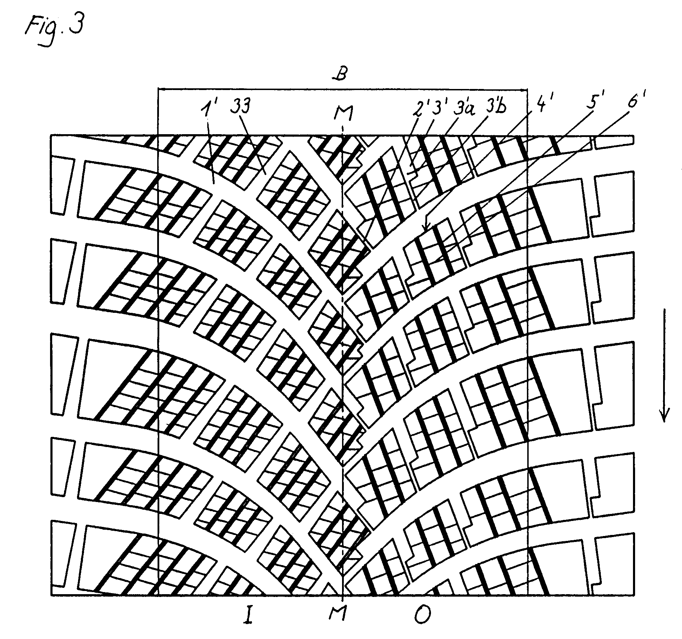

Weitere Merkmale, Vorteile und Einzelheiten der Erfindung werden nun anhand der Zeichnung, die zwei Ausführungsbeispiele der Erfindung darstellt, näher beschrieben. Dabei zeigt Fig. 1 eine Schrägansicht eines nach der Erfindung gestalteten Reifens, Fig. 2 eine Draufsicht auf eine Teilabwicklung des Laufflächenprofiles des Reifens gemäß Fig. 1, Fig. 2a einen Schnitt entlang der Linie A-A der Fig. 2, Fig. 2b eine Variante zu Fig. 2a, Fig. 2c einen Schnitt entlang der Linie C-C der Fig. 2, Fig. 2d eine Variante zu Fig. 2c und Fig. 3 eine Draufsicht auf eine Teilabwicklung eines Laufstreifens mit einem zweiten Ausführungsbeispiel der Erfindung.

Der in Fig. 1 in Schrägansicht dargestellte Reifen ist ein für den Einsatz unter winterlichen Fahrbedingungen vorgesehener Reifen für Personenkraftwagen, die höhere Geschwindigkeiten erreichen können. Dieser Reifen ist als Gürtelreifen mit einer Radialkarkasse konzipiert und kann somit in herkömmlicher Art und Weise aufgebaut sein. Der Reifen besitzt ein Laufstreifenprofil, dessen bodenberührender Bereich durch die Laufstreifenbreite B definiert ist. Die Laufstreifenbreite B entspricht der Profilbreite in der Bodenaufstandsfläche unter Fahrzeugbedingungen.

Unter Bezugnahme auf Fig. 1 und auf Fig. 2 werden nun im folgenden die konstruktiven Details des Laufstreifenprofiles näher erörtert. Dabei ist die Laufstreifenprofilmitte durch die Äquatorlinie M-M gekennzeichnet. Das Laufstreifenprofil besitzt in jeder Laufflächenhälfte verlaufende seitliche Rillen 1, die von den Schulterbereichen ausgehend zur Äquatorlinie M-M verlaufen und die, wie weiter unten noch beschrieben wird, jeweils ein kurzes Stück über die Äquatorlinie M-M in die zweite Laufflächenhälfte hinein ragen. Die in Umfangsrichtung voneinander beabstandeten seitlichen Rillen 1 bilden ein sogenanntes gerichtetes oder laufrichtungsgebundenes Laufstreifenmuster, indem sie derart kontinuierlich gekrümmt sind, daß der Winkel zwischen Tangenten an die jeweilige Rillenmittellinie und der Äquatorlinie M-M von der Äquatorlinie M-M zu den Laufstreifenrändern zu größer wird. Im vorliegenden Ausführungsbeispiel beträgt dieser Winkel im Bereich der Äquatorlinie M-M etwa 40° und wächst bis zum Laufstreifenrand auf ca. 80° an. Die seitlichen Rillen 1 werden zu den Laufstreifenrändern zu stetig breiter, wobei ihre Breite im Bereich der Äquatorlinie M-M ca. 4 bis 6 mm und im Bereich der Laufstreifenränder zwischen 7 und 9 mm beträgt. Die seitlichen Rillen 1, die in der einen Hälfte des Laufstreifenprofiles verlaufen, sind gegenüber den in der anderen Hälfte des Laufstreifenprofiles verlaufenden seitlichen Rillen 1 in Umfangsrichtung betrachtet gegeneinander versetzt, so daß jede seitliche Rille 1, die in der einen Laufstreifenhälfte verläuft über einen Verbindungsabschnitt 2 mit einer seitlichen Rille 1 aus der zweiten Laufstreifenhälfte verbunden ist. Der Reifen wird derart am Fahrzeug angeordnet, daß beim Abrollen des Reifens die axial inneren Endbereiche der seitlichen Rillen 1 zuerst in die Kontaktfläche mit dem Untergrund eintreten. Die schmalen Verbindungsabschnitte 2 sind nun in Verlängerung der einen Rillenwand angeordnet und weisen eine Breite von ca. 2 mm und eine Tiefe von 4 bis 6 mm auf.

In jeder Laufstreifenhälfte erfolgt durch je drei zumindest im wesentlichen parallel zueinander verlaufende Nuten 3, die die einander in Umfangsrichtung benachbarten seitlichen Rillen 1 miteinander verbinden, eine Gliederung des Laufstreifens in Blöcke 4. Die als gerade Nuten ausgebildeten Nuten 3 sind gegenüber der Umfangsrichtung (Äquatorlinie M-M) unter einem Winkel, der zwischen 15 und 40° beträgt, im vorliegenden Ausführungsbeispiel unter einem Winkel von ca. 25°, geneigt, wobei durch die insgesamt V-förmige Anordnung der seitlichen Rillen 1 die Neigung der Nuten 3, bezogen auf die Äquatorlinie M-M, in den beiden Laufstreifenhälften zueinander gegensinnig erfolgt. Die Nuten 3 haben einen breiten Nutabschnitt 3a und einen schmalen Nutabschnitt 3b, wobei der schmale Nutabschnitt 3b jener ist, mit dem die Nuten 3 beim Abrollen des Reifens zuerst in die Kontaktfläche mit dem Untergrund eintreten. Der breite Nutabschnitt 3a verläuft über einen Bereich von 50 bis 90 Prozent der Länge der Nuten 3, im vorliegenden Ausführungsbeispiel von ca. 80 Prozent. Die breiten Nutabschnitte 3a besitzen eine konstante Breite von 4 bis 7 mm, die schmalen Nutabschnitte 3b haben eine konstante Breite von 1,3 bis 3 mm, insbesondere von 2 mm. Die schmalen Nutabschnitte 3b besitzen eine Nutwand, die in Verlängerung der axial innen verlaufenden Nutwand des breiten Abschnittes 3a der Nuten 3 verläuft. Wie Fig. 2a zeigt, steigt der Nutgrund im Bereich des breiten Nutabschnittes 3a stetig an, um im Bereich des schmalen Nutabschnittes 3b wiederum auf die ursprüngliche Nuttiefe stetig abzufallen. Die Stelle mit der geringsten Nuttiefe besitzt eine Nuttiefe zwischen 3 und 6 mm, im vorliegenden Ausführungsbeispiel eine Tiefe von 4 mm. Fig. 2b zeigt eine mögliche Variante der Ausgestaltung der Nut 3 mit einer Grundanhebung, wobei im breiten Nutabschnitt 3a vorerst eine konstante Nuttiefe vorliegt und durch eine Schräge ein Übergang zu einer im Bereich des schmalen Nutabschnittes 3b reduzierten Nuttiefe, die dort konstant gehalten ist, erfolgt. Während des Gebrauchs des Reifens erfolgt durch den Profilabrieb, sobald also der Laufstreifen auf die Dessintiefe der schmalen Nutabschnitte 3b abgefahren ist, eine Änderung der Profilcharakteristik, da die Nuten 3 dann Sacknuten bilden und die ursprüngliche Blockstruktur zwischen benachbarten seitlichen Rillen 1 in eine Art Bandstruktur übergeht.

Die Blöcke 4 sind im Neuzustand des Reifens durch ein Netzwerk von Entlüftungsnuten 5 und Feineinschnitten 6 strukturiert. Jeder Block 4 besitzt zumindest 2 Feineinschnitte 6 mit einem, in Draufsicht betrachtet, treppenartigen Verlauf mit mindestens einer Abstufung. Die derart gebildeten langen und kurzen Abschnitte der Feineinschnitte 6 verlaufen in den Blöcken 4 in jeder Laufflächenhälfte zumindest im wesentlichen jeweils parallel zueinander, wobei die langen Abschnitte gegenüber der Äquatorlinie A-A unter einem Winkel von etwa 75° verlaufen und in den beiden Laufstreifenhäiften eine gegensinnige Orientierung dieses Winkels gegeben ist. Im wesentlichen parallel zu den Nuten 3 sind pro Block 4 mindestens 2 Entlüftungsnuten 5 vorgesehen, die geradlinig zwischen benachbarten seitlichen Rillen 1 verlaufen und die kurzen Abschnitte der Feineinschnitte 6 überdecken. Diese Entlüftungsnuten 5 weisen eine Breite von ca. 0,8 bis 1 mm und eine Tiefe von ebenfalls 1 mm auf, können jedoch bis zu 3 mm tief vorgesehen werden. Vereinzelt sind in Blöcken 4 Feineinschnitte 7 angeordnet, die lediglich aus einem geraden, zwischen benachbarten Entlüftungsnuten 5 oder zwischen einer Entlüftungnsut 5 und einer Nut 3 verlaufenden Abschnitt bestehen. Auch diese Feineinschnitte 7 verlaufen parallel zu den langen Abschnitten der Feineinschnitte 6. Die Schnittzeichnung in Fig. 2c zeigt die Anordnung eines der kurzen Abschnitte der Feineinschnitte 6 mit einer Entlüftungsnut 5, wobei die Entlüftungsnut 5 diesen Feineinschnittabschnitt mitting überdeckt. Fig. 2d zeigt eine Variante zu Fig. 2c, wobei der Feineinschnittabschnitt zumindest im wesentlichen in Verlängerung einer der Entlüftungsnutwände verläuft.

Die Feineinschnitte 6, 7 haben eine Breite ≦ 0,8 mm, insbesondere etwa 0,5 mm, und sind mit einer Dessintiefe von mindestens 4 mm, bevorzugt mit einer Tiefe, die der sonstigen Profiltiefe entspricht, vorgesehen. Im Fahrbetrieb des Reifens verschwinden die Entlüftungsnuten durch den Laufstreifenabrieb und in den einzelnen Blöcken 4 bleibt eine Vielzahl von die Griffeigenschaften günstig beeinflussenden Lamellenfeineinschnitten 6 und 7 bestehen.

Das in Fig. 3 dargestellte Laufstreifenprofil ist bezüglich der Äquatorlinie M-M asymmetrisch gestaltet und unterscheidet sich in einigen Details von dem in Fig. 1 dargestellten. Ein mit dieser Profilvariante versehener Reifen ist derart am Fahrzeug zu montieren, daß der mit I bezeichnete Laufstreifenbereich fahrzeuginnenseitig (der Fahrzeuglängsachse zugekehrt) liegt. Mit O ist der zweite Laufstreifenbereich bezeichnet. Über die Laufstreifenbreite B betrachtet besitzt dieses Laufstreifenprofil wiederum seitliche Rillen 1', die ebenfalls ein gerichtetes Laufstreifenmuster ergeben und kontinuierlich gekrümmt sind. Die in jeder Laufflächenhälfte verlaufenden seitlichen Rillen 1' sind über Verbindungsabschnitte 2', die in Verlängerung der der Drehrichtung zugewandten Rillenwände angeordnet sind, mit je einer seitlichen Rille 1' aus dem zweiten Laufstreifenbereich verbunden. Im Laufstreifenaußenbereich O sind die in Umfangsrichtung einander benachbarten seitlichen Rillen 1' durch gegenüber der Umfangsrichtung unter einem Winkel von ca. 25° geneigten Nuten 3' miteinander verbunden, deren Ausgestaltung und Anordnung, wie beim Ausführungsbeispiel gemäß Fig. 2 beschrieben, erfolgt. Die Nuten 3' besitzen demnach breite und schmale Nutabschnitte 3'a, 3'b. Im Laufstreifeninnenbereich I sind die in Umfangsrichtung benachbarten Rillen 1' durch Nuten 33 miteinander verbunden, die bezüglich der Äquatorlinie M-M betrachtet gegensinnig zu den Nuten 3' verlaufen und in der Abrollrichtung des Reifens betrachtet (siehe den Pfeil in Fig. 3) kontinuierlich breiter werden. Im vorliegenden Ausführungsbeispiel beträgt diese Breitenänderung zwei bis drei Millimeter, so daß die Nuten 33 eine Breite aufweisen, die von drei bis sechs Millimeter auf fünf bis neun Millimeter anwächst. Dabei schließen die Mittellinien der Nuten 33 mit der Äquatorlinie M-M einen Winkel ein, der um etwa 10 bis 25° größer ist als jener, den die Nuten 3' mit der Äquatorlinie M-M einschließen, wobei letzterer 15 bis 40°, im vorliegenden Ausführungsbeispiel ca. 25° beträgt.

Die durch die seitlichen Rillen 1' und die Nuten 3 bzw. 33 gebildeten Blöcke 4' sind ebenfalls durch ein Netzwerk von Entlüftungsnuten 5' und Feineinschnitten 6' strukturiert. Dieses Netzwerk ist nun im Laufstreifeninnenbereich I dichter als im Laufstreifenaußenbereich O. Im dargestellten Ausführungsbeispiel sind etwa in den im wesentlichen zum Laufstreifeninnenbereich gehörenden Blöcken 4' pro Block drei Entlüftungsnuten 5' und im Außenbereich O pro Block 4' zwei Entlüftungsnuten 5' angeordnet. Auch die Anzahl der Feineinschnitte 6' ist im Laufstreifeninnenbereich I größer als im Laufstreifenaußenbereich O. Die Ausgestaltung der Feineinschnitte 6' und deren Anordnungen gemeinsam mit den Entlüftungsnuten 5' entspricht jenen gemäß Fig. 2.

Die Erfindung ist auf die dargestellten Ausführungsbeispiele nicht eingeschränkt. Profilelemente mit der erfindungsgemäßen Anordnung von Feineinschnitten und Entlüftungsnuten können selbstverständlich auch in anders gestalteten Laufstreifenprofilen, beispielsweise in nicht laufrichtungsgebundenen und/oder mit Laufstreifenbändern und Profilblöcken versehenen Profilen, angeordnet werden. Abweichend von der dargestellten Form können die Feineinschnitte auch wellenförmig verlaufen. Es können ferner die Entlüftungsnuten einen vom geraden Verlauf abweichenden Verlauf aufweisen. Sowohl die breiten als auch die schmalen Nutabschnitte der Nuten 3 können eine Breite aufweisen, die sich über ihre Längserstreckung insbesondere kontinuierlich ändert Es ist auch möglich, daß die Nuten 3 einen vom dargestellten Verlauf abweichenden, demnach gekrümmten Verlauf aufweisen.

## Patentansprüche

1. Fahrzeugreifen mit einem drehrichtungsgebundenen Laufstreifenprofil, welches seitliche Rillen (1, 1') aufweist, die ausgehend vom Bereich des Reifenäquators (M-M) zu den Laufstreifenrändern zu derart gekrümmt verlaufen, daß der Winkel zwischen Tangenten an die jeweilige Rillenmittellinie und der Äquatorlinie (M-M) von der Äquatorlinie (M-M) zu den Laufstreifenrändern zu größer wird, wobei die axial inneren Endbereiche der seitlichen Rillen (1, 1') beim Abrollen des Reifens zuerst in die Kontaktflache mit dem Untergrund eintreten und wobei ferner durch Nuten (3, 3'), die die in Umfangsrichtung einander benachbarten seitlichen Rillen miteinander verbinden, Profilblöcke (4, 4') gebildet sind, dadurch gekennzeichnet, daß zumindest jene Nuten (3, 3'), die bei am Fahrzeug montierten Reifen im Laufstreifenaußenbereich angeordnet sind, einen breiten und einen schmalen Nutabschnitt (3a, 3b, 3'a, 3'b) aufweisen, wobei die schmalen Nutabschnitte (3b, 3'b) jene sind, die beim Abrollen des Reifens zuerst in die Kontaktfläche mit dem Untergrund eintreten.

2. Fahrzeugreifen nach Anspruch 1, dadurch gekennzeichnet, daß der Nutgrund dieser Nuten (3, 3') zumindest stellen- bzw. bereichsweise angehoben ist.

3. Fahrzeugreifen nach Anspruch 2, dadurch gekennzeichnet, daß der Nutgrund dieser Nuten (3, 3') im breiten Nutabschnitt (3a, 3'a) bis zum schmalen Nutabschnitt (3b, 3'b) zu stetig ansteigt und im schmalen Nutabschnitt (3b, 3'b) auf die ursprüngliche Nuttiefe stetig abfällt.

4. Fahrzeugreifen nach Anspruch 2, dadurch gekennzeichnet, daß die Nuttiefe im schmalen Nutabschnitt (3b, 3'b) konstant geringer ist als die Nuttiefe, die über zumindest einen Teil der Erstreckung des breiten Nutabschnittes (3a, 3'a) als ebenfalls konstante Nuttiefe vorgesehen ist.

5. Fahrzeugreifen nach einem der Ansprüche 2 bis 4, dadurch gekennzeichnet, daß die Nuttiefe im Bereich bzw. an der Stelle der geringsten Nuttiefe zwischen 3 und 6 mm, insbesondere 4 mm, beträgt.

6. Fahrzeugreifen nach einem der Ansprüche 1 bis 5, dadurch gekennzeichnet, daß die Nuten (3, 3') mitsamt ihren schmalen Nutabschnitten (3a, 3'b) als gerade verlaufende Nuten ausgebildet sind, die mit der Äquatorlinie des Reifens einen spitzen Winkel, der zwischen 15 und 40°, insbesondere zwischen 20 und 30°, beträgt, einschließen.

7. Fahrzeugreifen nach einem der Ansprüche 1 bis 6, dadurch gekennzeichnet, daß die schmalen Nutabschnitte (3b, 3'b) höchstens über die Hälfte der Gesamtlänge der Nuten (3, 3') verlaufen.

8. Fahrzeugreifen nach einem der Ansprüche 1 bis 7, dadurch gekennzeichnet daß die Breite des schmalen Nutabschnittes (3b, 3'b) zwischen 1,5 und 3 mm, insbesondere 2 mm, beträgt.

9. Fahrzeugreifen nach einem der Ansprüche 1 bis 8, dadurch gekennzeichnet, daß die eine Seitenwand des schmalen Nutabschnittes (3b, 3'b) in Verlängerung der einen Seitenwand des breiten Nutabschnittes (3a, 3'a) verläuft.

## Claims

1. Vehicle tyre having a tread strip profile which is adapted to the direction of rotation and includes lateral notches (1, 1') extending from the region of the tyre centre (M-M) to the tread strip edges in such a curved manner that the angle between tangents at the respective notch centre axis and the centre line (M-M) becomes greater from the centre line (M-M) to the tread strip edges, the axially inner end regions of the lateral notches (1, 1') initially entering the area in contact with the underlying ground during the travelling movement of the tyre, and profile blocks (4, 4') also being formed by grooves (3, 3'), which interconnect the lateral notches lying adjacent one another when viewed with respect to the circumferential direction, characterised in that at least those grooves (3, 3') which are disposed in the external region of the tread strip when the tyre is assembled on the vehicle have a wide and a narrow groove portion (3a, 3b, 3'a, 3'b), the narrow groove portions (3b, 3'b) being those which initially enter the area of contact with the underlying ground during the travelling movement of the tyre.

2. Vehicle tyre according to claim 1, characterised in that the base of these grooves (3, 3') is raised at least at various locations or in various regions.

3. Vehicle tyre according to claim 2, characterised in that the base of these grooves (3, 3') steadily ascends in the wide groove portion (3a, 3'a) towards the narrow groove portion (3b, 3'b) and steadily descends to the original groove depth in the narrow groove portion (3b, 3'b).

4. Vehicle tyre according to claim 2, characterised in that the groove depth in the narrow groove portion (3b, 3'b) is constantly smaller than the groove depth which is provided as the likewise constant groove depth over at least a part of the extension of the wide groove portion (3a, 3'a).

5. Vehicle tyre according to one of claims 2 to 4, characterised in that the groove depth in the region or at the location of the smallest groove depth is between 3 and 6 mm, more especially 4 mm.

6. Vehicle tyre according to one of claims 1 to 5, characterised in that the grooves (3, 3'), together with their narrow groove portions (3a, 3'a), are configured as grooves which extend rectilinearly and form with the centre line of the tyre an acute angle which is between 15 and 40°, more especially between 20 and 30°.

7. Vehicle tyre according to one of claims 1 to 6, characterised in that the narrow groove portions (3b, 3'b) extend, at most, over half the total length of the grooves (3, 3').

8. Vehicle tyre according to one of claims 1 to 7, characterised in that the width of the narrow groove portion (3b, 3'b) is between 1.5 and 3 mm, more especially 2 mm.

9. Vehicle tyre according to one of claims 1 to 8, characterised in that one lateral wall of the narrow groove portion (3b, 3'b) extends as an extension of one lateral wall of the wide groove portion (3a, 3'a).

## Revendications

1. Bandage pneumatique pour véhicule, muni d'un profil de bande de roulement tributaire du sens de rotation, qui présente des rainures latérales (1, 1') s'étendant à partir de la région de l'équateur (M-M) du pneumatique, en direction des bords de la bande de roulement, avec une courbure telle que l'angle, entre la ligne équatoriale (M-M) et des tangentes à l'axe médian considéré d'une rainure, augmente de la ligne équatoriale (M-M) vers les bords de la bande de roulement ; bandage dans lequel les régions extrêmes axialement intérieures des rainures latérales (1, 1') pénètrent initialement, lors du roulement du pneumatique, dans la surface en contact avec le sol ; et dans lequel, par ailleurs, des blocs profilés (4, 4') sont formés par des gorges (3, 3') reliant entre elles les rainures latérales voisines dans le sens périphérique, caractérisé par le fait qu'au moins les gorges (3, 3'), disposées dans la zone extérieure de la bande de roulement lorsque le pneumatique est monté sur le véhicule, présentent des segments large et étroit (3a, 3b, 3'a, 3'b), les segments étroits (3b, 3'b) des gorges étant ceux qui, lors du roulement du pneumatique, pénètrent initialement dans la surface en contact avec le sol.

2. Bandage pneumatique pour véhicule, selon la revendication 1, caractérisé par le fait que le fond de ces gorges (3, 3') est rehaussé, respectivement, au moins par endroits ou par zones.

3. Bandage pneumatique pour véhicule, selon la revendication 2, caractérisé par le fait que le fond de ces gorges (3, 3') monte en continu dans le segment large (3a, 3'a) des gorges, jusqu'en direction du segment étroit (3b, 3'b) desdites gorges, et descend en continu dans le segment étroit (3b, 3'b) des gorges, jusqu'à la profondeur initiale desdites gorges.

4. Bandage pneumatique pour véhicule, selon la revendication 2, caractérisé par le fait que la profondeur des gorges est constamment plus faible, dans le segment étroit (3b, 3'b) desdites gorges, que la profondeur prévue, sur au moins une partie de l'étendue du segment large (3a, 3'a) des gorges, en tant que profondeur semblablement constante desdites gorges.

5. Bandage pneumatique pour véhicule, selon l'une des revendications 2 à 4, caractérisé par le fait que la profondeur des gorges mesure entre 3 et 6 mm, en particulier 4 mm dans la région ou, respectivement, à l'emplacement de profondeur minimale desdites gorges.

6. Bandage pneumatique pour véhicule, selon l'une des revendications 1 à 5, caractérisé par le fait que les gorges (3, 3') sont réalisées, conjointement à leurs segments étroits (3a, 3'b), sous la forme de gorges s'étendant rectilignement et formant, avec la ligne équatoriale du pneumatique, un angle aigu mesurant entre 15 et 40°, notamment entre 20 et 30°.

7. Bandage pneumatique pour véhicule, selon l'une des revendications 1 à 6, caractérisé par le fait que les segments étroits (3b, 3'b) des gorges s'étendent, au maximum, sur la moitié de la longueur totale desdites gorges (3, 3').

8. Bandage pneumatique pour véhicule, selon l'une des revendications 1 à 7, caractérisé par le fait que la largeur du segment étroit (3b, 3'b) des gorges mesure entre 1,5 et 3 mm, notamment 2 mm.

9. Bandage pneumatique pour véhicule, selon l'une des revendications 1 à 8, caractérisé par le fait que l'une des parois latérales du segment étroit (3b, 3'b) des gorges s'étend dans le prolongement de l'une des parois latérales du segment large (3a, 3'a) desdites gorges.
